# EUROPEAN PATENT SPECIFICATION

(11) **EP 4 675 133 B1**
(45) Date of publication and mention of the grant of the patent: **21.10.2026**
(21) Application number: 25182123.7
(22) Date of filing: 11.06.2025
(51) Int. Cl.: F16H 61/04, F16H 63/50

(54) **METHOD AND DEVICE FOR QUICKLY SHIFTING THE GEAR OF THE ENGINE OF A MOTORCYCLE**
VERFAHREN UND VORRICHTUNG ZUM SCHNELLEN SCHALTEN DES MOTORGETRIEBES EINES MOTORRADES
PROCÉDÉ ET DISPOSITIF POUR LE CHANGEMENT RAPIDE DE VITESSE D'UN MOTEUR DE MOTOCYCLETTE

(30) Priority: 01.07.2024 IT 202400015088
(43) Date of publication of application: 07.01.2026
(73) Proprietor: Ducati Motor Holding S.p.A., 40132 Bologna (IT)
(72) Inventor: FORCONI, Marco, 50012 Bagno a Ripoli (FI) (IT); DORETTI, Duccio, 40133 Bologna (BO) (IT); D'ELIA, Ottavio, 40033 Casalecchio di Reno (BO) (IT); ZAMPIERI, Pierluigi, 40037 Sasso Marconi (BO) (IT); DI PIAZZA, Simone, 40141 Bologna (BO) (IT)
(74) Representative: Ripamonti, Enrico

(56) References cited:
- US-A1- 2017 067 555
- US-A1- 2019 264 803

## Description

The present invention relates to a method and a system for quickly shifting the gear of an engine of a motorcycle according to the preamble of the corresponding independent claim. The characteristics in such preamble are disclosed in US2019/0264803.

Methods and systems adapted to allow to quickly shift gears of an engine of a motorcycle ("quickshift" systems) have long been known. Usually, such systems use two sensors or switches for activating a methodology (or "strategy") for shifting gears that is with an increase of the gear (upshift) and with a decrease of the gear (downshift). In particular, a prior art solution provides for a dedicated gear shift sensor which detects the action of the rider of the vehicle on the usual gear pedal lever and generates an analogue signal directed to a control unit (or a command and control unit) of the vehicle engine. The latter interprets such signal as a gear shift request by the rider and if appropriate pre-conditions (such as for example the operation is sufficiently distant from the idling speed or the overspeed limitation operation, or the complete engagement of the clutch) are met, such control unit acts on the engine to allow the quickshift.

Furthermore, in the prior art solution, a second sensor is arranged on the rotary member or selector drum of the gearbox; such second sensor verifies whether the shift strategy, upshift or downshift, is activated correctly and whether the operation is completed as expected.

For the methods with which the prior art quickshift systems are made, they may be significantly costly (even due to the use of the double sensor and the electronics correlated to the sensors which enables the effective use thereof) and they are also quite expensive due to the possible operations for the maintenance or repair of failures often linked to each sensor used.

Furthermore, the prior art systems may have relatively long intervention times, and this is not acceptable in motorcycle racing, and give the rider a resistance feeling when shifting gears also due to the presence, in said solutions, of an elastic element between the gear lever and the gearbox selector drum.

An object of the present invention is to provide an improved method and system for quickly shifting gears in a motorcycle.

In particular, an object of the present invention is to provide a method and a system for quickly shifting the gear of an engine of a motorcycle which gives the rider an improved feeling with respect to that given by the prior art solutions, both when shifting and when disengaging the gear to neutral.

Another object is to provide a system and a method of the type mentioned above which enable to make the gear shift (or "shifting") as repeatable as possible, especially in sports mode / racing use so as to have an excellent control of the vehicle.

A further object is to provide a system and a method of the type mentioned above which always provides for shifting gears with the "quickshift" strategy even with low revolutions or loads of the engine.

A further object of the present invention is to provide a method and a system for quickly shifting gears which allow the mechanical members of the gearbox to be effectively prepared to shift gears as soon as the rider starts the action on the gear lever, ensuring very short action times.

A further object is to provide a system for shifting gears with the quickshift mode that is more cost-effective than that of systems that are similar and already known and that is highly reliable.

These and other objects which shall be apparent to the person skilled in the art are attained by a method and by a system according to the corresponding independent claims.

For a better understanding of the present invention, the following drawings are attached hereto, purely by way of non-limiting example, wherein:
figure 1 shows a detail of an engine of a motorcycle having a gear assembly where the present invention is implemented;
figure 2 shows a sectional view according to line 2-2 of figure 1;
figure 3 shows a chart of the development of the voltage measured by the gearbox drum sensor when the rider actuates the gear lever without removing the torque applied to the engagements, from said figure there being observable a possible implementation mode of the method according to the invention;
figure 4 shows a general block flow diagram of the steps for implementing the method according to the invention; and
figure 5 shows, in a diagram, an example of the steps for implementing the method according to the invention.

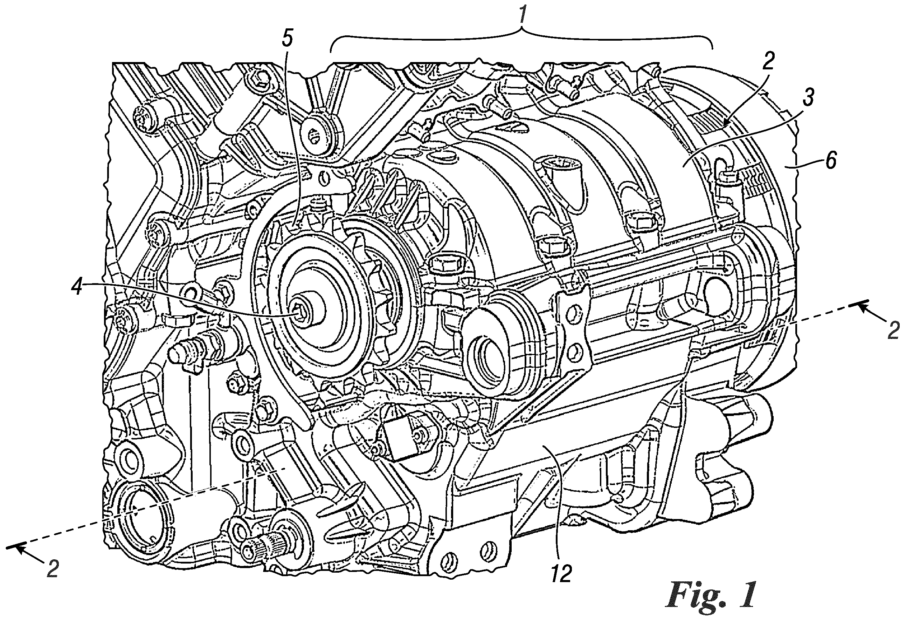

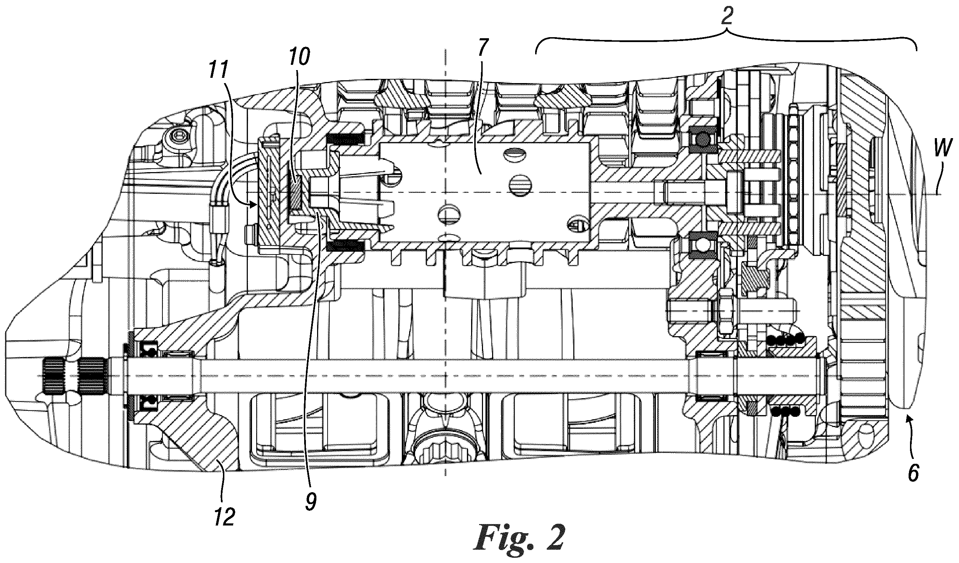

With reference to figures 1 and 2 mentioned above they partially show an engine or drive unit 1 of a motorcycle. Such engine is controlled by a control unit or ECU per se known (not shown), operating in a per se known manner. Therefore, except for aspects relating to the present invention and which will be reported below in the present document, such operating modes of the ECU will not be further described below.

The engine 1 comprises a gear assembly 2 having an outer casing 3 from which there protrudes a shaft 4 on which there is keyed a gearwheel 5 for transferring the motion to a usual member for transmitting the power supplied by the engine 1 to the rear wheel of the vehicle (not shown). In a known manner, the gear assembly has a usual clutch 6 and a rotary member or selector drum of the gearbox 7 of the per se known type and adapted to allow, through the cooperation thereof with usual selector elements ("or forks", not shown), to shift the engine gear. The member or drum of the gearbox 7 is adapted to rotate around a longitudinal axis W thereof and it carries at an end 9 thereof a body 10 adapted to cooperate with a sensor 11 arranged on the crankcase 12 of the engine 1. In particular, in an embodiment, such body 10 is a magnet and the sensor 11 is a Hall-effect sensor.

Said body 10 and the sensor 11 (connected to the ECU indicated above) allow to detect the angular condition of the drum of the gearbox 7 around the axis thereof and detect the engaged gear.

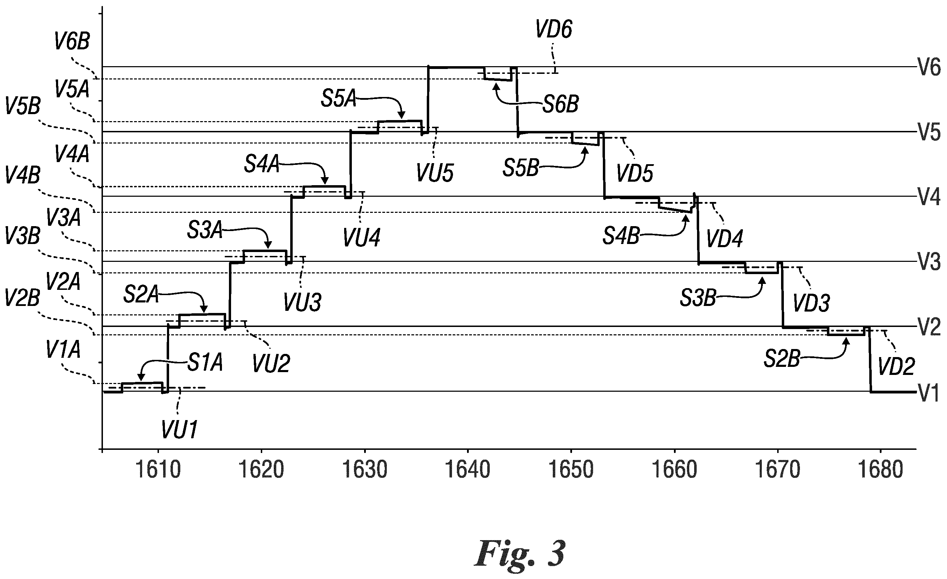

The sensor 11 generates a voltage signal at each engaged gear. Figure 3 shows various signals V1, V2, V3, V4, V5 and V6 generated by the sensor 11 and sent to the ECU of the engine which identify each engaged gear; hereinafter, we will indicate each of such values as the "idle voltage value of each gear" (there are provided for six engageable gears in this case).

Such voltage values, gear by gear, are self-learnt by the ECU and therefore they are stored by the latter.

Whenever a rider shifts a gear by acting on the usual gear lever, during the movement of the lever, the known components of the gear assembly 2 move to allow the disengagement of the current gear and the engagement of the desired gear; as long as the current gear is not disengaged, between the components of the gear assembly there is a clearance adjustment which is shown in figure 3. This clearance adjustment leads to a change in the signal of the sensor 11 up to the values indicated in figure 3 with S14, S2A, S3A, S4A, S5A in the event of upshift and with S6B, S5B, S4B, S3B and S2B in the event of downshift. The signal generated by the sensor 11 during clearance adjustment may reach a maximum (upshift) or minimum (downshift) voltage value indicated in figure 3 as V1A, V2A, V3A, V4A, V5A during upshift and V6B, V5B, V4B, V3B and V2B during downshift. Such voltage values will be indicated as "clearance recovery voltage values".

The sign of the change in the signal generated by the sensor 11, increasing or reducing with respect to the idle voltage value, allows the ECU to establish whether the gear shift should be a downshift or an upshift given that such sign identifies the direction of the force that the rider applies to the gear lever.

Between each idle voltage and the corresponding clearance recovery voltage (for example between V1 and V1A or between V1 and V2B) there is therefore a voltage difference or delta. This is due to mechanical factors related to the design of the selector drum and in particular due to the usual tracks present on the latter which guide the movement of the "forks" and the tolerance of the various couplings of the mechanical members of the gear assembly.

In order to allow a quickshift according to the present invention, within each voltage delta indicated above there is set a threshold which is shown with a dashed line in figure 3 which is indicated as VU1, VU2, VU3, VU4 and VU5 in the event of an upshift, and as VD6, VD5, VD4, VD3 and VD2 in the event of a downshift.

Each voltage threshold represents a corresponding gear shift (upshift or downshift) threshold for each gear. Each voltage threshold value is therefore predefined and fixed.

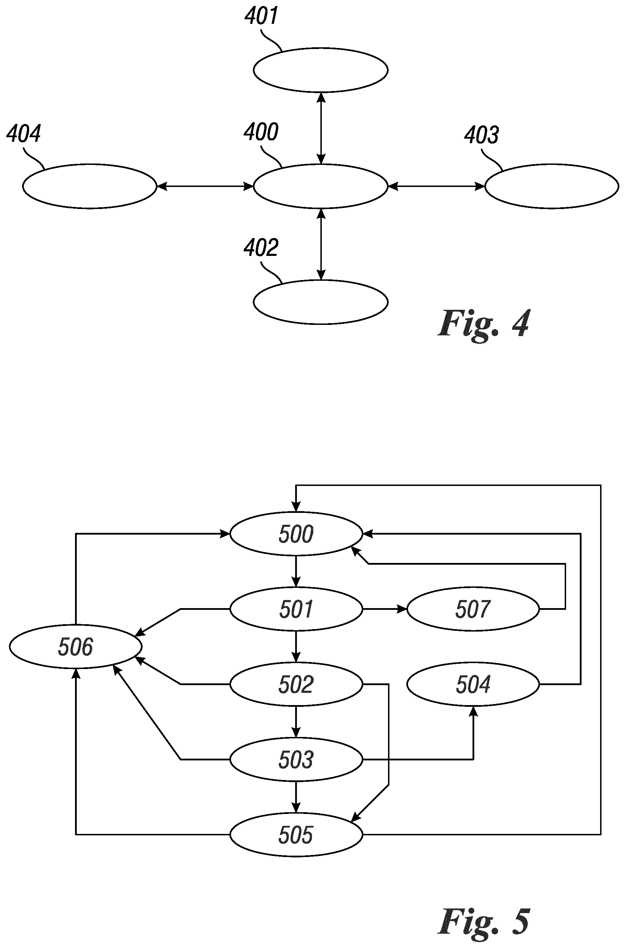

Therefore, with reference to figures 4 and 5, when the rider uses the motorcycle with a specific gear engaged, the method according to the invention remains in standby 400. When the rider acts on the gear lever for upshift or downshift (obviously depending on the gear already engaged), the sensor 11 detects the start of rotation of the drum of the gearbox 7 which corresponds to the generation of a voltage signal which exceeds, in upshift or downshift, the voltage threshold that is pre-established and indicated above.

The exceeding (in upshift or downshift) of such threshold value is detected by the ECU which acts on the engine so that it generates the torque dynamics required to accept and support such gear shift.

It should be observed that the threshold value for each gear is suitably calibrated for each gear and, changes depending on the gear. This also allows to differentiate the promptness of the system on different gears calibrating the threshold differently.

In particular, the threshold value is selected so as not to be too close to the idle voltage value so as to avoid the risks of activation of the gear shift should the rider touch the gear lever, but sufficiently close to such value so as to have a certain promptness of the system (comprising the body 10 associated with the drum of the gearbox 7, the sensor 11 and the ECU of the vehicle) upon activating the methodology of the gear shift, and to still have an actuation of the gear shift that is as "soft" as possible.

Furthermore, such threshold value is not even too close to the clearance recovery voltage values so as to avoid lesser promptness of the system in activating the gear shift methodology, but sufficiently close to be sure to clearly detect the intention of the rider to activate such methodology, so as to prevent the gear shift to be perceived as "hard" and so as to avoid to fail to achieve the threshold, should the mechanical tolerances be lower than expected.

Therefore, each threshold value is suitably identified as a percentage of the voltage difference (signal detected by the sensor 11 between the stable position and the clearance recovery position. Depending on the gear, this value may be suitably calibrated to obtain determined behaviour: greater or lesser promptness of the system and corresponding greater or lesser strength in detecting the intention of the rider to shift gears. The values are defined using appropriate tests on the vehicle and they may also change from one application to another.

Returning to figures 4 and 5, figure 4 shows that from the standby condition or step 400, depending on the action of the rider on the gear lever, the method provides for switching to an upshift step or to a downshift step. In order to shift gears first and foremost so as to avoid damaging the mechanics of the transmission and still complete the operation, the gear can be shifted generating suitable torque dynamics which allow to disengage the engaged gear depending on the driving situation, generating or reducing the torque applied at the time of request by the rider.

Figure 4 shows with a block flow diagram the method according to the invention due to which, from a standby step 400 there can be obtained an upshift (in the usual manner that is when driving with torque delivery by the engine, or when driving in a driven fashion that is without torque delivery by the engine, blocks 401 and 402) or a downshift (still in the usual manner therefore in a driven fashion, or in a driving fashion with drive torque delivery generated by the engine at the time of gear shift request by the rider, blocks 403 and 404). The distinction between upshift (blocks 401 and 402) of downshift (blocks 403 and 404) occurs depending on the development of the signal detected by the sensor 11. The distinction between driven operation (blocks 402 and 404) and torque delivery operation (401 and 403) is carried out depending on the torque requested by the rider using the usual accelerator knob at the time of the start of the gear shift.

Figure 5 more specifically shows the method according to which the system according to the invention operates that is the method subject of the invention.

In step 500, the motorcycle moves with a gear engaged and the rider does not request (or has requested) any gear shift.

In step 500, the rider manifests the intention to shift gears (at the initial time of the movement of the gear lever); such detection occurs through the sensor 11 which detects an initial movement of the body 10 associated with the drum of the gearbox 7 which starts a rotation around its axis W.

With reference to figure 3, for example such detection occurs by generating a voltage signal K between two voltage signals corresponding to the engaged gear and to the target or shift gear: in the example, the motorcycle moves with gear four engaged and the signal K causes a change in the voltage emitted by the value sensor V4 to the value VU4 in the event of an upshift and to the value VD4 in the event of a downshift.

With this detection, the system switches to a step 501 during which the ECU generates the appropriate torque dynamics to disengage the current gear.

It should be observed that in step 500, before switching to step 501 and once the ECU detects a movement of the drum in the downshift direction, there may be activated a substep in which there is created a "torque reserve" that is a drive torque surplus to make the gear shift comfortable and so as not to generate excessive stresses on the mechanical members of the gearbox.

Such torque reserve is obtained by the ECU simultaneously advancing the opening of the usual throttle valve of the engine and degrading the advance applied so that the system is more prompt in generating the drive torque as soon as the shift start threshold is achieved and then on to the next step 501. Therefore, it should be observed that by so doing, the ECU does not generate a positive drive torque until the actual gear shift begins.

As mentioned above, the sensor 11 detects the movement of the drum of the gearbox 7 following the action of the rider on the gear pedal and generates the signal K (see figure 3, between gear four and five).

When such signal exceeds the value VU4, the ECU detects that the rider is shifting a gear and acts on the engine to modulate the torque thereof. At the same time, the current gear is disengaged due to such torque modulation and the action of the rider on the gear lever.

While the drum of the gearbox continues its rotation around its axis W, the ECU of the vehicle detects the disengagement of the gear through the development of the signal K. When this happens, the system moves to the step 502 shown in figure 5.

Furthermore, it should be observed that from step 501 one can move to a step 507 should the ECU detect that the current gear is not disengaged; this through the signal emitted by the sensor 11, which does not exceed the gear disengagement threshold (which is known to the ECU given that it is calibrated depending on the design of the gearbox drum). In this case, the ECU commands the engine so that there are generated torque oscillations to help the drum to return to its stable gear position. This step 507 is maintained until the ECU detects that the drum has returned to its stable gear position or the rider has pulled the clutch lever.

Lastly, it should be observed that when implementing step 501, should the rider slowly move gear lever during a downshift, the positive drive torque generated by the engine could be perceived by the rider as a forward push of the motorcycle. This could happen when during the application of the slight positive drive torque so as to disengage the gear, the rider does not sufficiently push on the lever and does not disengage the engaged gear at the start of the operation as promptly as necessary. As a result, the positive torque is transmitted to the wheel generating an unwanted forward thrust of the vehicle. In this case there is applied an "antipush" action which avoids such forward push suitably reducing the generated torque before there is the impact between the two driven and driving wheels.

During step 502, the ECU supports the engagement of the target gear by suitably generating torque for synchronising the engagements.

From step 502 one can move to a step 505 in which, by monitoring the development of the voltage signal (in the example, when it reaches the value V5) emitted by the sensor 11, the ECU of the vehicle detects the successful engagement of the target gear. During step 505, the ECU returns the applied torque from the one modulated during step 502 to the one requested by the rider using a knob. The vehicle continues with such engaged gear and there is a return to step 500.

However, in case of non-engagement of the target gear (detected by the ECU upon failure to reach the stable threshold of the subsequent gear), the ECU activates a control of the engine to generate an oscillating development of the torque between positive and negative values (with zero average value, so as to avoid impacts on the dynamics of the vehicle) adapted to "shake" the gearbox and try to solve the partial engagement situations on the gears or their failure to be engaged. Such operation is carried out in step 503.

Should the "shaking" of the gearbox of step 503 lead to the engagement of the gear, the system moves on to step 505 described above. Otherwise, the system moves on to step 504 when, upon monitoring the signal emitted by the sensor 11, there is not detected the successful engagement of the target gear within an established time as the limit for the evolution of the gear shift. Such time ranges from 150 to 500 ms depending on the type of gear shift and the engaged gear.

In this step 504, the engine limits the speed to the one that would be reached with the gear engaged until the situation is solved. This so as to avoid the re-engagement of the usual gears of the gear assembly 2 at high speed revolutions, and this could damage the components of the gear.

From this step, the system returns to step 500 when the rider acts on the clutch lever or otherwise engages the target gear or the operation start one.

From each step 501, 502, 503 and 505, the system can also move to a recovery step 506 into which the system enters in case of a failure that occurs during a gear shift. From step 506 the system returns to step 500 after deactivating and restarting the motorcycle by turning a key should the ECU not detect further failures.

The system according to the invention (comprising the body 10, sensor 11, drum 7 and ECU) can therefore allow the gear shift without using sensors associated with the gear lever and detecting the movement of the drum of the gearbox 7 alone. Furthermore, compared to the prior art equivalent solutions, there is no the usual elastic element between the gear lever and the drum with resulting improvement of the feeling that the rider receives when searching for the neutral gear and when actuating the aforementioned lever.

Thanks to the use of the sensor 11 cooperating with the body 10 associated with the drum of the gearbox 7, the gear shift is more repeatable, especially during a use of the motorcycle for sports purposes. Furthermore, the gear shift is always carried out in quickshift mode even at low speed revolutions of the engine or with low loads where with the prior art solutions the sensor arranged on the gear lever cannot detect the action of the rider before completing the gear shift given that there is no resistance to the disengagement by the gearbox and resulting engagement of the gear. Lastly, in particular racing applications, like in the SBK championship, the ECU can be set so that the strategy (method) of application of the quickshift gearbox starts in advance as soon as the rider touches the gear lever with resulting load on the forks which lasts for a limited period of time, shorter than the usual one used currently.

This also enables to obtain a reduction of costs and the operational complexity of the system, a greater reliability with respect to the prior art systems operating the quickshift gearbox and a reduction of the maintenance operations with respect to what occurs with the prior art systems.

A specific embodiment of the invention has been described. However, even other variants possible to the person skilled in the art may be provided in the light of the description above, all falling within the scope of protection that is defined by the claims that follow.

## Claims

1. Method for shifting a gear in an engine of a motorcycle, said engine being controlled and commanded in its operation by a control unit, the engine comprising a gear assembly (2) having a drum (7) adapted to rotate around its longitudinal axis (W) so as to actuate elements which select the various gears of the gear assembly (2), there being provided for a position sensor (11) connected to the control unit adapted to detect various angular positions of said drum (7) corresponding to the various gears engaged, the sensor (11) generating an idle electrical signal (V1, V2, V3, V4, V5, V6) when said drum (7) is in stationary position corresponding to an engaged gear, said sensor (11) also generating a clearance recovery electrical signal (V1A, V2A, V3A, V4A, V5A, V2B, V3B, V4B, V5B, V6B) after shifting a gear and before said gear is engaged definitely, said electrical signals being received by the control unit of the engine which therefore detects a gear shift, **characterised in that** there is defined a threshold value of the signal emitted by the sensor (11), for each gear (VU1, VU2, VU3, VU4, VU5, VD2, VD3, VD4, VD5, VD6), said threshold value being arranged between the corresponding idle and clearance recovery electrical signals, the control unit controlling the change of the idle electrical signal generated by the sensor (11) with respect to the initial idle one generated by the sensor (11) and, when such idle electrical signal changes with respect to the initial idle signal and reaches said threshold value, the control unit identifies the intention of the rider to shift the gear, said control unit therefore intervening on the engine so as to prepare the gear shift, said gear shift being considered completed when the sensor (11) generates an idle electrical signal different from the initial one.

2. Method according to claim 1, **characterised in that** the change of the initial idle electrical signal starts when the rider acts on the gear lever.

3. Method according to claim 1, **characterised in that** said change of the idle electrical signal is alternatively in the direction of increasing such signal or a decrease thereof.

4. Method according to claim 1, **characterised in that** the signal emitted by the sensor (11) is a voltage signal.

5. Method according to claim 1, **characterised in that** said threshold value of the signal emitted by the sensor (11) is defined as the intermediate value between the value of the idle electrical signal and the value of the clearance recovery electrical signal.

6. Method according to claim 5, **characterised in that** the threshold value of the signal emitted by the sensor (11) is calibrated for each gear and changes as a function of the gear.

7. Method according to claim 1, **characterised in that**, when the signal generated by the sensor (11) deviates from the value of the idle signal during the downshift, there is generated a torque reserve of the engine by simultaneously opening the known throttle valve of the engine and adjusting that is downgrading the ignition advance of the engine.

8. Method according to claim 1, **characterised in that** the control unit of the engine commands the generation of engine torques oscillating between the positive and negative values should the control unit not detect the successful engagement of a different gear after the gear shift request, said detection being obtained by detecting the development of the signal generated by the sensor (11) which does not reach the stable position of the target gear.

9. Method according to claim 1, **characterised in that** there is provided for a step (504) in which there is maintained a pre-set number of revolutions of the engine should the control unit detect the non-engagement of a gear subsequently to the request of the rider to change the initial gear, such maintenance of said number of revolutions lasting for a limited period of time.

10. Method according to claim 1, **characterised in that** the control unit commands the engine to generate successive drive torque pulses when it is detected that the gear engaged is not disengaged, said detection occurring upon detecting that the electrical signal does not exceed the gear disengagement threshold, said threshold being known to the control unit of the engine depending on the drawing of the gearbox drum.

11. Method according to claim 1, **characterised in that** each idle electrical signal (V1, V2, V3, V4, V5, V6) corresponding to a respective engaged gear is self-learnt by the control unit of the engine (1).

12. Method according to claim 1, **characterised in that** during the downshift should the sensor (11) detect that the current gear is not disengaged within the expected times, the control unit of the engine intervenes so as to reduce the torque delivered to carry out the operation so as to prevent it from making the vehicle accelerate in an undesired manner.

13. System for shifting a gear in an engine of a motorcycle, a control unit being provided for controlling and commanding the operation of said engine, the engine comprising a gear assembly (2) having a drum (7) adapted to rotate around its longitudinal axis (W) so as to actuate elements which select the various gears of the gear assembly (2), there being provided for a position sensor (11) connected to the control unit adapted to detect the various angular positions of a body (10) associated with said drum (7) corresponding to the various gears engaged, the sensor (11) generating an idle electrical signal (V1, V2, V3, V4, V5, V6) directed to said control unit when said drum (7) is a stationary position corresponding tc an engaged gear, said sensor (11) also generating a clearance recovery electrical signal (V1A, V2A, V3A, V4A, V5A, V2B, V3B, V4B, V5B, V6B) after shifting a gear and before said gear is engaged definitely, the control unit of the engine being adapted to receive said electrical signals generated by the position sensor and therefore detecting a gear shift, **characterised in that** there is defined a threshold value of the signal emitted by the sensor (11) for each gear (VU1, VU2, VU3, VU4, VU5, VD2, VD3, VD4, VD5, VD6), said threshold value being arranged between the corresponding idle and clearance recovery electrical signals, the control unit controlling the change in an initial idle electrical signal generated by the sensor (11) and when such initial idle electrical signal changes and reaches said threshold value, the control unit identifies the intention of the rider to shift the gear, therefore said control unit intervening on the engine so as to prepare the gear shift, said gear shift being considered carried out when the sensor (11) generates an idle electrical signal different from the initial one.

14. System according to claim 13, **characterised in that** said sensor (11) is arranged externally on a crankcase of the engine at the gear assembly (2).

15. System according to claim 13, **characterised in that** the body (10) with which the sensor (11) cooperates is arranged at one end of the drum (7).

## Patentansprüche

1. Verfahren zum Schalten eines Gangs in einem Motor eines Motorrads, wobei der Motor von einer Steuereinheit gesteuert und in seinem Betrieb befehligt wird, und der Motor eine Getriebebaugruppe (2) mit einer Trommel (7) umfasst,
die so ausgelegt ist, dass sie sich um ihre Längsachse (W) dreht, um Elemente zu betätigen, die die verschiedenen Gänge der Getriebebaugruppe (2) auswählen, wobei ein Positionssensor (11) vorgesehen ist, der mit der Steuereinheit verbunden ist und dazu dient, verschiedene Winkelpositionen der genannten Trommel (7) zu erfassen
die den verschiedenen eingelegten Gängen entsprechen, wobei der Sensor (11) ein Leerlauf-Elektrosignal (V1, V2, V3, V4, V5, V6) erzeugt, wenn sich die genannte Trommel (7) in
einer statischen Stellung befindet, die einem eingelegten Gang entspricht, wobei der Sensor (11) auch ein Spielausgleichs-Elektrosignal (V1A, V2A, V3A, V4A, V5A, V2B, V3B, V4B, V5B, V6B) nach dem Gangwechsel und vor dem endgültigen Einlegen des Gangs erzeugt, wobei die elektrischen Signale von der Steuereinheit des Motors empfangen werden, die daher einen Gangwechsel erkennt, **dadurch gekennzeichnet, dass** für jeden Gang (VU1, VU2, VU3, VU4, VU5, VD2, VD3, VD4, VD5, VD6) ein Schwellenwert des vom Sensor (11) ausgesendeten Signals definiert ist, wobei dieser Schwellenwert zwischen den entsprechenden Leerlauf-und Spielausgleichs-Elektrosignalen angeordnet ist, die Steuereinheit die Änderung des vom Sensor (11) erzeugten Leerlauf-Elektrosignals im Vergleich zu dem vom Sensor (11) erzeugten ursprünglichen Leerlaufsignal steuert und, wenn sich dieses Leerlauf-Elektrosignal im Vergleich zum ursprünglichen Leerlaufsignal ändert und den genannten Schwellenwert erreicht, die Steuereinheit die Absicht des Fahrers zum Gangwechsel erkennt, wobei die Steuereinheit daher am Motor eingreift, um den Gangwechsel vorzubereiten, wobei der Gangwechsel als abgeschlossen gilt, wenn der Sensor (11) ein Leerlauf-Elektrosignal erzeugt, das vom anfänglichen Signal abweicht.

2. Verfahren nach Anspruch 1, **dadurch gekennzeichnet, dass** die Änderung des anfänglichen Leerlauf-Elektrosignals beginnt, wenn der Fahrer den Schalthebel betätigt.

3. Verfahren nach Anspruch 1, **dadurch gekennzeichnet, dass** die Änderung des Leerlauf-Elektrosignals alternativ in Richtung einer Erhöhung oder einer Verringerung dieses Signals erfolgt.

4. Verfahren nach Anspruch 1, **dadurch gekennzeichnet, dass** das vom Sensor (11) ausgesendete Signal ein Spannungssignal ist.

5. Verfahren nach Anspruch 1, **dadurch gekennzeichnet, dass** der Schwellenwert des vom Sensor (11) ausgesendeten Signals als Zwischenwert zwischen dem Wert des Leerlauf-Elektrosignals und dem Wert des Spielausgleichs-Elektrosignals definiert ist.

6. Verfahren nach Anspruch 5, **dadurch gekennzeichnet, dass** der Schwellenwert des vom Sensor (11) ausgesendeten Signals für jeden Gang kalibriert ist und sich in Abhängigkeit vom Gang ändert.

7. Verfahren nach Anspruch 1, **dadurch gekennzeichnet, dass** beim Herunterschalten, wenn das vom Sensor (11) erzeugte Signal vom Wert des Leerlaufsignals abweicht, eine Drehmomentreserve des Motors erzeugt wird, indem gleichzeitig das bekannte Drosselventil des Motors geöffnet und der Zündzeitpunkt des Motors zurückverlegt wird.

8. Verfahren nach Anspruch 1, **dadurch gekennzeichnet, dass** die Steuereinheit des Motors die Erzeugung von Motordrehmomenten, die zwischen positiven und negativen Werten oszillieren, befiehlt, falls die Steuereinheit nach der Gangwechselanforderung kein erfolgreiches Einlegen eines anderen Gangs erkennt, wobei diese Erkennung durch Erkennen der Entwicklung des vom Sensor (11) erzeugten Signals erfolgt, das nicht die stabile Position des Zielgangs erreicht.

9. Verfahren nach Anspruch 1, **dadurch gekennzeichnet, dass** ein Schritt (504) vorgesehen ist, in dem eine voreingestellte Motordrehzahl beibehalten wird, falls die Steuereinheit das Nicht-Einlegen eines Gangs nach der Anforderung des Fahrers zum Gangwechsel erkennt, wobei diese Beibehaltung der Drehzahl für eine begrenzte Zeitdauer erfolgt.

10. Verfahren nach Anspruch 1, **dadurch gekennzeichnet, dass** die Steuereinheit den Motor anweist, aufeinanderfolgende Antriebsmomentimpulse zu erzeugen, wenn erkannt wird, dass der eingelegte Gang nicht ausgekuppelt wird, wobei diese Erkennung erfolgt, indem festgestellt wird, dass das elektrische Signal den Schwellenwert für das Auskuppeln des Gangs nicht überschreitet, wobei dieser Schwellenwert der Steuereinheit des Motors abhängig von der Ausführung der Getriebetrommel bekannt ist.

11. Verfahren nach Anspruch 1, **dadurch gekennzeichnet, dass** jedes Leerlauf-Elektrosignal (V1, V2, V3, V4, V5, V6), das einem jeweiligen eingelegten Gang entspricht, von der Steuereinheit des Motors (1) selbständig erlernt wird.

12. Verfahren nach Anspruch 1, **dadurch gekennzeichnet, dass** beim Herunterschalten, falls der Sensor (11) erkennt, dass der aktuelle Gang nicht innerhalb der erwarteten Zeiten ausgekuppelt wird, die Steuereinheit des Motors eingreift, um das abgegebene Drehmoment zu reduzieren, um zu verhindern, dass das Fahrzeug unerwünscht beschleunigt.

13. System zum Schalten eines Gangs in einem Motor eines Motorrads, wobei eine Steuereinheit vorgesehen ist, die den Betrieb des genannten Motors steuert und befehligt, der Motor eine Getriebebaugruppe (2) mit einer Trommel umfasst
(7), die so ausgelegt ist, dass sie sich um ihre Längsachse
(W) dreht, um Elemente zu betätigen, welche die verschiedenen Gänge der Getriebebaugruppe (2) auswählen, wobei ein Positionssensor (11) vorgesehen ist, der mit der Steuereinheit verbunden ist und dazu dient, die verschiedenen Winkelpositionen eines Körpers (10) zu erfassen, der mit der genannten Trommel (7)
entsprechend den verschiedenen eingelegten Gängen verbunden ist, wobei der Sensor (11) ein Leerlauf-Elektrosignal (V1, V2, V3, V4, V5, V6) an die genannte Steuereinheit sendet, wenn sich die genannte Trommel (7) in einer statischen Stellung befindet, die einem eingelegten Gang entspricht, wobei der Sensor (11) auch ein Spielausgleichs-Elektrosignal (V1A, V2A, V3A, V4A, V5A, V2B, V3B, V4B, V5B, V6B) nach dem Gangwechsel und vor dem endgültigen Einlegen des Gangs erzeugt, wobei die Steuereinheit des Motors dazu ausgelegt ist, die vom Positionssensor erzeugten elektrischen Signale zu empfangen und daher einen Gangwechsel zu erkennen, **dadurch gekennzeichnet, dass** für jeden Gang (VU1, VU2, VU3, VU4, VU5, VD2, VD3, VD4, VD5, VD6) ein Schwellenwert des vom Sensor (11) ausgesendeten Signals definiert ist, wobei dieser Schwellenwert zwischen den entsprechenden Leerlauf- und Spielausgleichs-Elektrosignalen angeordnet ist, die Steuereinheit die Änderung eines ursprünglichen Leerlauf-Elektrosignals, das vom Sensor (11) erzeugt wird, steuert und wenn sich dieses ursprüngliche Leerlauf-Elektrosignal ändert und den genannten Schwellenwert erreicht, erkennt die Steuereinheit die Absicht des Fahrers zum Gangwechsel, wobei die Steuereinheit daher am Motor eingreift, um den Gangwechsel vorzubereiten, wobei der Gangwechsel als durchgeführt gilt, wenn der Sensor (11) ein vom anfänglichen Leerlauf-Elektrosignal abweichendes Signal erzeugt.

14. System nach Anspruch 13, **dadurch gekennzeichnet, dass** der genannte Sensor (11) außen an einem Motorgehäuse der Getriebebaugruppe (2) angeordnet ist.

15. System nach Anspruch 13, **dadurch gekennzeichnet, dass** der Körper (10), mit dem der Sensor (11) zusammenarbeitet, an einem Ende der Trommel (7) angeordnet ist.

## Revendications

1. Méthode de changement de vitesse dans un moteur de moto, ledit moteur étant contrôlé et commandé dans son fonctionnement par une unité de commande, le moteur comprenant un ensemble d'engranages (2) comportant un tambour (7)
adapté à tourner autour de son axe longitudinal (W) afin d'actionner des éléments qui sélectionnent les différentes vitesses de l'ensemble d'engranages (2), un capteur de position (11) étant prévu, connecté à l'unité de commande et adapté à détecter les différentes positions angulaires dudit tambour (7) correspondant aux différentes vitesses engagées, le capteur (11) générant un signal électrique au repos (V1, V2, V3, V4, V5, V6) lorsque ledit tambour (7) est en
position stationnaire correspondant à une vitesse engagée, ledit capteur (11) générant également un signal électrique de récupération du jeu (V1A, V2A, V3A, V4A, V5A, V2B, V3B, V4B, V5B, V6B) après un changement de vitesse et avant que ladite vitesse ne soit définitivement engagée, lesdits signaux électriques étant reçus par l'unité de commande du moteur qui détecte donc un changement de vitesse, **caractérisée en ce qu'**une valeur seuil du signal émis par le capteur (11) est définie pour chaque vitesse (VU1, VU2, VU3, VU4, VU5, VD2, VD3, VD4, VD5, VD6), ladite valeur seuil étant située entre les signaux électriques au repos et de récupération du jeu correspondants, l'unité de commande contrôlant la variation du signal électrique au ralenti généré par le capteur (11) par rapport au signal au repos initial généré par le capteur (11) et, lorsque ce signal électrique au repos varie par rapport au signal au repos initial et atteint ladite valeur seuil, l'unité de commande identifie l'intention du pilote de changer de vitesse, ladite unité de commande intervenant donc sur le moteur afin de préparer le changement de vitesse, ce changement de vitesse étant considéré comme terminé lorsque le capteur (11) génère un signal électrique au repos différent de celui initial.

2. Méthode selon la revendication 1, **caractérisée en ce que** la variation du signal électrique au repos initial commence lorsque le pilote agit sur le levier de vitesses.

3. Méthode selon la revendication 1, **caractérisée en ce que** ladite variation du signal électrique au repos est alternativement dans le sens d'une augmentation ou d'une diminution dudit signal.

4. Méthode selon la revendication 1, **caractérisée en ce que** le signal émis par le capteur (11) est un signal de tension.

5. Méthode selon la revendication 1, **caractérisée en ce que** ladite valeur seuil du signal émis par le capteur (11) est définie comme la valeur intermédiaire entre la valeur du signal électrique au repos et la valeur du signal électrique de récupération du jeu.

6. Méthode selon la revendication 5, **caractérisée en ce que** la valeur seuil du signal émis par le capteur (11) est calibrée pour chaque vitesse et varie en fonction de la vitesse.

7. Méthode selon la revendication 1, **caractérisée en ce que**, lorsque le signal généré par le capteur (11) s'écarte de la valeur du signal au repos lors du rétrogradage, une réserve de couple du moteur est générée par l'ouverture simultanée du papillon des gaz connu du moteur et par l'ajustement, c'est-à-dire la réduction, de l'avance à l'allumage du moteur.

8. Méthode selon la revendication 1, **caractérisée en ce que** l'unité de commande du moteur commande la génération de couples moteurs oscillant entre des valeurs positives et négatives si l'unité de commande ne détecte pas l'engagement réussi d'une vitesse différente après la demande de changement de vitesse, ladite détection étant obtenue en détectant le développement du signal généré par le capteur (11) qui n'atteint pas la position stable de la vitesse cible.

9. Méthode selon la revendication 1, **caractérisée en ce qu'**il est prévu une étape (504) dans laquelle un nombre de tours du moteur prédéfini est maintenu si l'unité de commande détecte le non-engagement d'une vitesse suite à la demande du pilote de changer la vitesse initiale, ladite maintenance dudit nombre de tours durant une période limitée.

10. Méthode selon la revendication 1, **caractérisée en ce que** l'unité de commande commande le moteur pour générer des impulsions successives de couple moteur lorsqu'il est détecté que la vitesse engagée n'est pas désengagée, ladite détection se produisant lors de la détection que le signal électrique ne dépasse pas le seuil de désengagement de la vitesse, seuil connu de l'unité de commande du moteur en fonction du dessin du tambour de la boîte de vitesses.

11. Méthode selon la revendication 1, **caractérisée en ce que** chaque signal électrique au repos (V1, V2, V3, V4, V5, V6) correspondant à une vitesse engagée respective est auto-appris par l'unité de commande du moteur (1).

12. Méthode selon la revendication 1, **caractérisée en ce que** lors du rétrogradage, si le capteur (11) détecte que la vitesse actuelle n'est pas désengagée dans les temps prévus, l'unité de commande du moteur intervient afin de réduire le couple délivré pour effectuer l'opération afin d'empêcher une accélération indésirable du véhicule.

13. Système de changement de vitesse dans un moteur de moto, une unité de commande étant prévue pour contrôler et commander le fonctionnement dudit moteur, le moteur comprenant un ensemble d'engranages (2) comportant un tambour
(7) adapté à tourner autour de son axe longitudinal (W) afin d'actionner des éléments qui sélectionnent les différentes vitesses de l'ensemble d'engranages (2), un capteur de position (11) étant prévu, connecté à l'unité de commande et adapté à détecter les différentes positions angulaires d'un corps (10) associé audit tambour (7)
correspondant aux différentes vitesses engagées, le capteur (11) générant un signal électrique au repos (V1, V2, V3, V4, V5, V6) destiné à ladite unité de commande lorsque ledit tambour
(7) est en position stationnaire correspondant à une vitesse engagée, ledit capteur (11) générant également un signal électrique de récupération du jeu (V1A, V2A, V3A, V4A, V5A, V2B, V3B, V4B, V5B, V6B) après un changement de vitesse et avant que ladite vitesse ne soit définitivement engagée, l'unité de commande du moteur étant adaptée à recevoir lesdits signaux électriques générés par le capteur de position et détectant donc un changement de vitesse, **caractérisée en ce qu'**une valeur seuil du signal émis par le capteur (11) est définie pour chaque vitesse (VU1, VU2, VU3, VU4, VU5, VD2, VD3, VD4, VD5, VD6), ladite valeur seuil étant située entre les signaux électriques au repos et de récupération du jeu correspondants, l'unité de commande contrôlant la variation d'un signal électrique au repos initial généré par le capteur (11) et lorsque ce signal électrique au repos initial varie et atteint ladite valeur seuil, l'unité de commande identifie l'intention du pilote de changer de vitesse, ladite unité de commande intervenant donc sur le moteur afin de préparer le changement de vitesse, ce changement de vitesse étant considéré comme effectué lorsque le capteur (11) génère un signal électrique au repos différent de celui initial.

14. Système selon la revendication 13, **caractérisé en ce que** ledit capteur (11) est disposé à l'extérieur d'un carter du moteur au niveau de l'ensemble de vitesses (2).

15. Système selon la revendication 13, **caractérisé en ce que** le corps (10) avec lequel le capteur (11) coopère est disposé à une extrémité du tambour (7).
